# EUROPEAN PATENT SPECIFICATION

(11) **EP 3 147 227 B1**
(45) Date of publication and mention of the grant of the patent: **26.12.2018**
(21) Application number: 16186890.6
(22) Date of filing: 01.09.2016
(51) Int. Cl.: B65B 13/02, B26D 1/10, B23D 29/02, B26B 27/00, B26D 5/10, B26D 7/14, B25B 25/00

(54) **PAWL SHROUD WITH TEXTURED SURFACE**
KLINKENVERKLEIDUNG MIT TEXTURIERTER OBERFLÄCHE
PLATEAU À CLIQUET À SURFACE TEXTURÉE

(30) Priority: 01.09.2015 US 201562212806 P
(43) Date of publication of application: 29.03.2017
(73) Proprietor: Hellermanntyton Corporation, Milwaukee, WI 53224 (US)
(72) Inventor: Myers,, Travis J., Whitefish Bay, WI Wisconsin 53217 (US)
(74) Representative: Robert, Vincent

(56) References cited:
- WO-A1-98/08635
- WO-A1-2013/003471
- US-A- 4 093 005
- US-A- 4 997 011

## Description

### Background of the Invention

The present invention relates to hand held tensioning and cutting tools, and particularly to an improved hand tool for tensioning and cutting cable ties.

Cable ties are widely used in a variety of environments and applications. They may be used, for example, to bundle a plurality of elongate wires, cables, or other elongate articles. Cable ties may also be used to secure elongate articles to rigid structures or used as hose clamps, by way of example. Such cable ties typically include an elongate tie tail portion and a head portion. The elongate tie tail portion may be threaded through the integral head portion to encircle the elongate articles to be bound. In use, a hand held tensioning and cutting tool may draw the elongate tie tail through the cable tie head, to tightly bind the elongate articles into a bundle. After the tie is tensioned around the bundle, the excess length of the tie tail which extends out of the head portion is then severed by the tool close to the head. Ties are often applied in high volumes and to precise tensions.

Many presently available tie tensioning and severing tools require an operator to apply an excessive force on their triggers which leads tool operator fatigue after only a relatively small number of cables ties have been installed by the operator. Other electric or pneumatic tie tensioning and severing tools may apply uneven force during tensioning. Moreover, the gripping mechanism of known devices may slip or unevenly distribute force during tensioning, thereby causing the tie tail to break or tear during tensioning.

WO 2013/003471 discloses a cable tie tensioning and cut-off tool according to the preamble of claim 1.

### Summary of the Invention

The present invention is directed to a hand-held tensioning and severing tool which avoids the aforementioned shortcomings. According to the present invention, there is provided a cable tie tensioning and cut-off tool according to claim 1.

In accordance with an important aspect of the present invention, an improved hand-held tie tool is provided which includes a gripping mechanism wherein a pawl hood is provided with an aggressive texture pattern on its surface that contacts the tie tail. The texture pattern imparts an additional gripping quality to the pawl hood and more evenly distributes force on the tie tail during tensioning.

### Brief Description of the Drawings

Figure 1 is a perspective view of a cable tie tensioning and cut-off tool according to the present invention.
Figure 2 is a left side view of the tool illustrated in Figure 1.
Figure 3 is a top view of the tool illustrated in Figures 1 and 2.
Figure 4 is a view similar to that of Figure 2, but with a portion of the housing removed with cable tie and bundle shown in phantom.
Figure 5 is an enlarged fragmentary view of the tool illustrated in Figure 4 and showing a pawl link with shroud according to the present invention.
Figure 6 is a perspective view of a pawl link with shroud according to the present invention.
Figure 7 is another perspective view of the pawl link with shroud illustrated in Figure 6.
Figure 8 is a view similar to that of Figure 5, but showing a tie tail in phantom engaged between a pawl and textured pawl shroud.
Figure 9A is a partial sectional view taken along line 9A of Figure 7 and showing a pattern of a textured pawl shroud.
Figure 9B is a partial sectional view taken along line 9B of Figure 7, similar to that of Figure 9A, and showing another pattern of a textured pawl shroud.
Figure 9C is a cross sectional view of Figure 9A and taken along line 9C - 9C thereof.
Figure 10A is a partial sectional view taken along line 10A of Figure 7, similar to that of Figures 9A and 9B, and showing another pattern of a textured pawl shroud.
Figure 10B is a partial sectional view taken along line 10B of Figure 7, similar to that of Figures 9A, 9B and 10A, and showing another pattern of a textured pawl shroud.
Figure 10C is a cross sectional view of Figure 10A and taken along line 10C - 10C thereof.
Figure 11A is a partial sectional view taken along line 11A of Figure 7, similar to that of Figures 9A, 9B, 10A, and 10B, and showing another pattern of a textured pawl shroud.
Figure 11B is a partial sectional view taken along line 11B of Figure 7, similar to that of Figures 9A, 9B, 10A and 10B, and showing another pattern of a textured pawl shroud.
Figure 11C is a cross sectional view of Figure 11A and taken along line 11C - 11C thereof.
Figure 12A is a partial sectional view taken along line 12A of Figure 7, similar to that of Figures 9A, 9B, 10A, 10B, 11A, and 11B, and showing another pattern of a textured pawl shroud.
Figure 12B is a partial sectional view taken along line 12B of Figure 7, similar to that of Figures 9A, 9B, 10A, 10B, 11A, and 11B, and showing another pattern of a textured pawl shroud.
Figure 12C is a cross sectional view of Figure 12A and taken along line 12C - 12C thereof.
Figure 13A is a partial sectional view taken along line 13A of Figure 7, similar to that of Figures 9A, 9B, 10A, 10B, 11A, 11B, 12A, and 12B, and showing another pattern of a textured pawl shroud.
Figure 13B is a partial sectional view taken along line 13B of Figure 7, similar to that of Figures 9A, 9B, 10A, 10B, 11A, 11B, 12A, and 12B, and showing another pattern of a textured pawl shroud.
Figure 13C is a cross sectional view of Figure 13A and taken along line 13C - 13C thereof.
Figure 14A is a partial sectional view taken along line 14A of Figure 7, similar to that of Figures 9A, 9B, 10A, 10B, 11A, 11B, 12A, 12B, 13A and 13B, and showing another pattern of a textured pawl shroud.
Figure 14B is a partial sectional view taken along line 14B of Figure 7, similar to that of Figures 9A, 9B, 10A, 10B, 11A, 11B, 12A, 12B, 13A and 13B, and showing another pattern of a textured pawl shroud.
Figure 14C is a cross sectional view of Figure 14A and taken along line 14C - 14C thereof.
Figure 15A is a partial sectional view taken along line 15A of Figure 7, similar to that of Figures 9A, 9B, 10A, 10B, 11A, 11B, 12A, 12B, 13A, 13B, 14A and 14B, and showing another pattern of a textured pawl shroud.
Figure 15B is a partial sectional view taken along line 15B of Figure 7, similar to that of Figures 9A, 9B, 10A, 10B, 11A, 11B, 12A, 12B, 13A, 13B, 14A and 14B, and showing another pattern of a textured pawl shroud.
Figure 15C is a cross sectional view of Figure 15A and taken along line 15C - 15C thereof.

### Description of the Preferred Embodiment

Although the disclosure hereof is detailed and exact to enable those skilled in the art to practice the invention, the physical embodiments herein disclosed merely exemplify the invention which may be embodied in other specific structures. While the preferred embodiment has been described, the details may be changed without departing from the invention, which is defined by the claims.

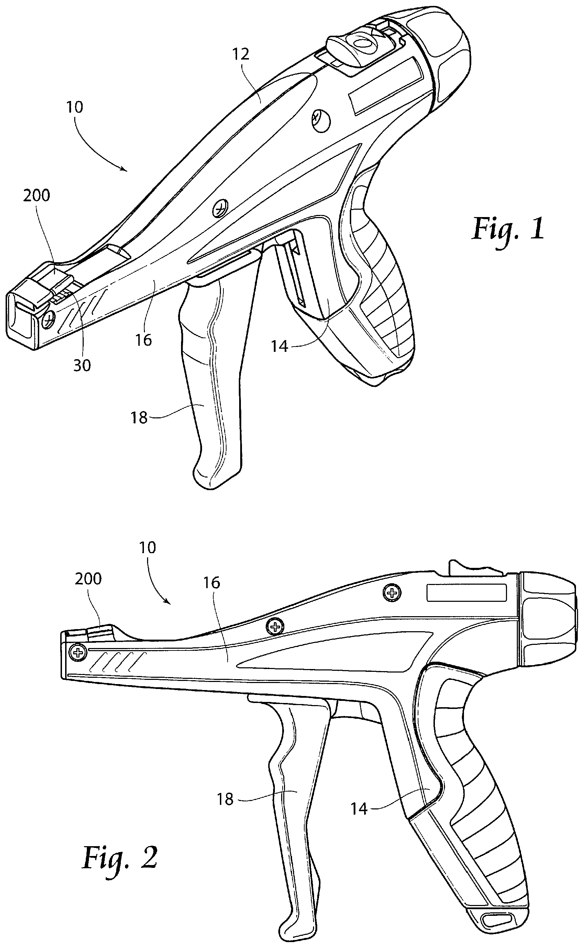

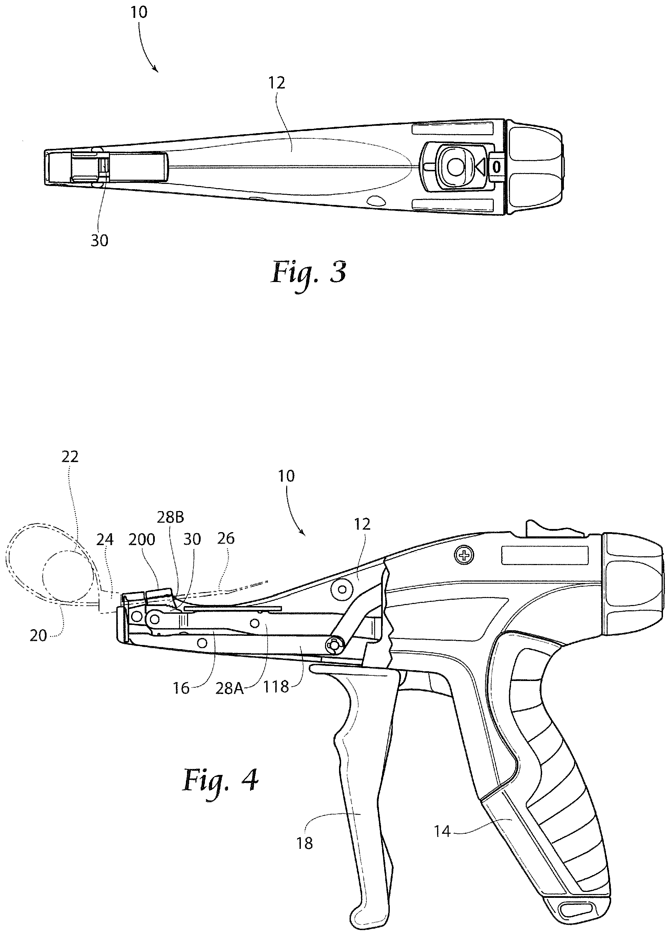

Referring now to the drawings and in particular to Figures 1 and 2, an embodiment of a cable tie tensioning and cut-off tool 10 incorporating the principles of the present invention is shown. As illustrated, the tool 10 includes a housing 12 in the shape of a pistol or gun and having a handle or grip portion 14, a barrel portion 16, and a trigger 18. The trigger 18 is located forwardly of the grip 14 and under the barrel portion 16 where it fits naturally in the hand of a user (not shown) . While a manually operated tool 190 is shown in the Figures, it is to be understood that the present invention is applicable to both electrically and pneumatically operable tools 10 as well. The tool 10 is typically used to install cable ties 20 (seen in phantom in Figure 4) around elongate bundles 22, such as wire cable or the like. The tool 10 may be used to install cable ties 20 in a wide variety of environments and applications. For example, the tool 10 may be used to bundle together a plurality of elongate wires, cables, or other elongate articles 22, as is shown in the Figures, or it may be used in conjunction with cable ties 20 in other applications, such as to secure elongate articles 22 to rigid structures or to clamp hoses (not shown), by way of non-limiting examples. As illustrated and will be discussed, a tie 20 for use with the present tool 10 preferably includes a head portion 24 and a tie tail portion 26. In use, a pawl 30 in conjunction with a pawl shroud 200, grips the tail portion 26 of the tie 20 and pawl link 28A, 28B pulls the tail portion 26 through the head portion 24 until a predetermined tension is achieved around an elongate article 22. A blade member 160 in the barrel 16 of the tool 10 cuts off the excess tail portion 26 adjacent the head 24.

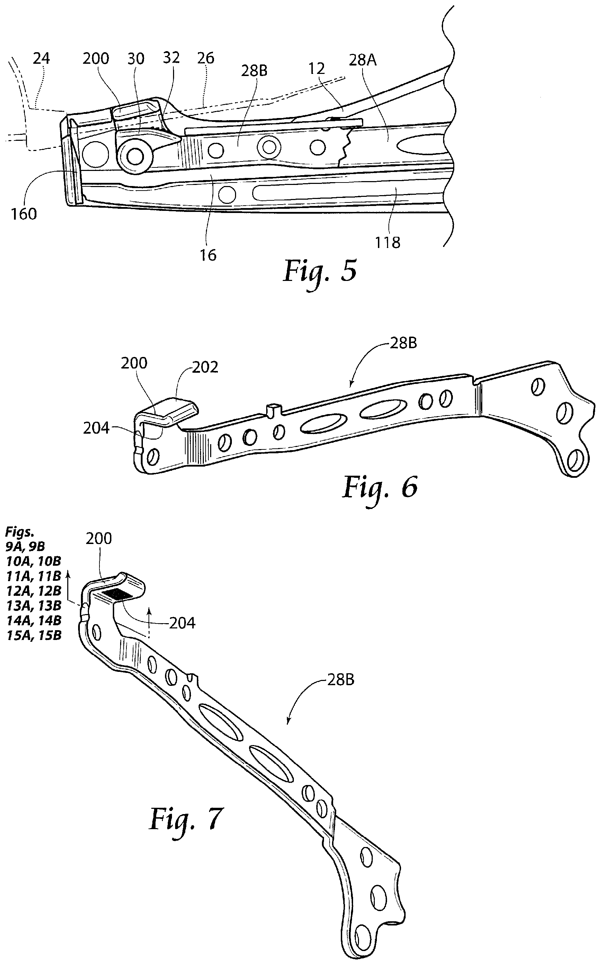

With particular attention to Figures 4 and 5, part of one housing 12 sidewall has been cut away to show the opposite housing 12 sidewall and the internal parts and mechanism of the present tool 10. The tool 10 generally contains a reciprocating tension mechanism, such as the pawl links 28A, 28B shown, located in the barrel portion 16 of the tool 10 and activated by the trigger 18. AS mentioned, the pawl link 28A, 28B is associated with a gripping mechanism, such as the tie-gripping pawl 30 shown, which in combination with a pawl shroud 200 cooperates to grip the tail portion 26 of a tie 20, as will be discussed.

With attention to Figures 6 and 7, pawl link 28B may be seen to further include a pawl shroud 200 having a top surface 202 and a bottom surface 204, wherein the bottom surface 204 is provided with a predetermined texture having a high coefficient of friction. The textured bottom surface 204 provides additional gripping capability than in previous known designs. The textured bottom surface 204 provides a more even distribution of force on the tail 26 during tensioning to thereby reduce tail 26 breakage. Moreover, the textured bottom surface 204 further allows ties 20 to be more uniformly tensioned without undue stretching. The pawl links 28A, 28B further include a gripping mechanism therebetween, such as the tie-gripping toothed pawl 30 shown, for gripping the tail portion 26 of a tie 20.

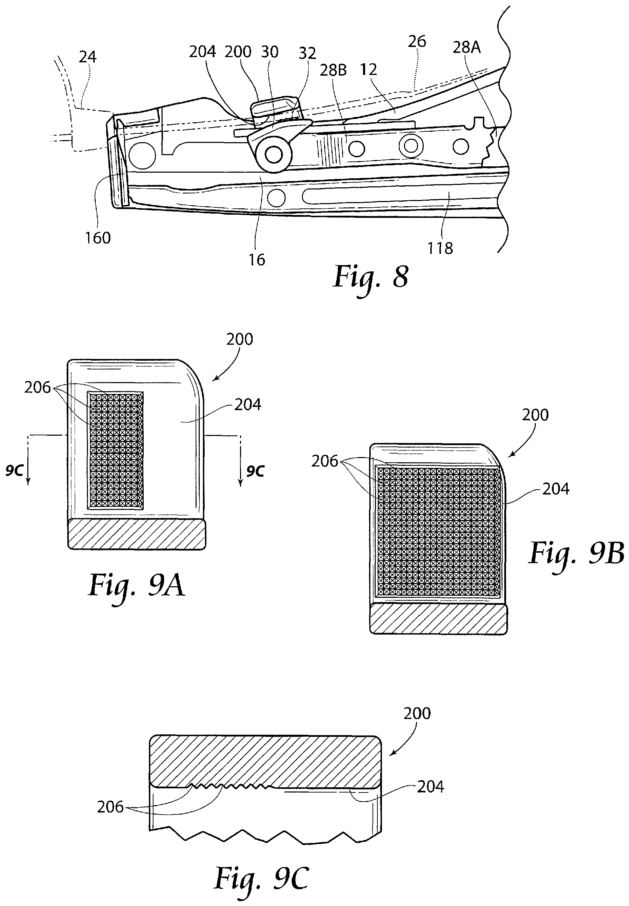

In operation, and as further seen in Figure 8, the tail portion 26 is gripped between the toothed pawl 30 and the pawl shroud lower surface 204, and pulled rearwardly to a predetermined tension. Upon reaching the predetermined tension, a cutoff mechanism, such as the illustrated cutter link 118, also located at the forward end of the barrel portion 16, activates to cause a blade member 160 to cut off the tie tail 26 closely adjacent the head portion 24. The pawl shroud 200 has a bottom surface 204 that provides an increased coefficient of friction by way of a predetermined texture, as will be discussed in detail.

As mentioned, the present device provides improved gripping of the tie tail 26 during tensioning and cut off, such that more uniform tensioning of the tie 20 is achieved. Specifically, the textured pawl shroud 200 allows better grip on the tie tail 26 during tensioning and therefore less distortion and stretching of the tail 26 occurs during tensioning. The effect reduces breakage of the tile tail 26 since the tensioning force is more evenly distributed. A pawl shroud 200 for use in the present invention may be made of steel, plastic or other suitable material. The views of Figures 5 - 8 illustrate the pawl shroud 200 is seen as having a bottom surface 204 configured to increase the coefficient of friction over a partial area or substantially the entire surface. A predetermined portion, or substantially all, of the bottom surface 204 may be modified to provide the desired coefficient of friction. For example, the surface 204 may include an aggregate or other modifications to intentionally increase its friction characteristics, as will be discussed.

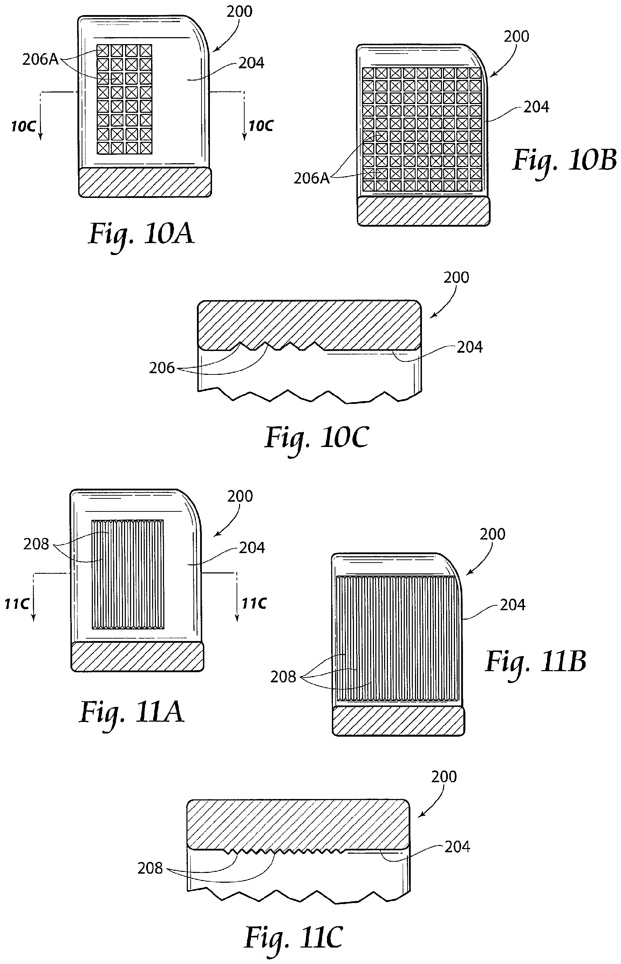

With particular attention to Figures 9A - 15C, various textured bottom surfaces 204 of a pawl shroud 200 according to the present invention may be seen. With reference particularly to Figures 9A - 9C, the predetermined texture pattern of the bottom surface 204 of the pawl shroud 200 may be seen as a plurality of recessed knurls 206. As shown, the knurls 206 may cover a portion of the bottom surface 204, as is illustrated in Figure 9A, or substantially the entire bottom surface 204, as seen in Figure 9B. Figure 9C is a cross section view illustrating recessed knurls 206 as applied to the bottom surface 204. Figures 10A - 10C illustrate a pattern of knurls 206A similar to that of Figures 9A - 9C, but showing knurls 206A having a larger size as compared to those in Figures 9A - 9C. In both instances, the knurls 206, 206A operate in conjunction with the toothed pawl 30 to provide increased resistance to slippage, due to an increased coefficient of friction, of the tie tail 26 during tensioning. The addition of the recessed knurls 206, 206A on the bottom surface 204 of the pawl shroud 200 improves grip on the tie tail 26. Moreover, since the tensioning forces act on a greater portion of the tie tail 26 as is contacted by the bottom surface 204, rather than merely against a tooth 32 of the pawl 30, an added advantage is a reduction of tie 20 breakage during installation and tensioning. The tensioning forces are dispersed more evenly against the tie tail 26 as compared to known arrangements. This feature provides the further benefit of extending longevity of the pawl 30, since the upstanding pawl teeth 32 are not required to be maintained in as sharp a condition as when used without the present pawl shroud 200. Moreover, the required hold force is reduced, thereby lessening wear on other cooperating components of the tool 10.

Figures 11A - 11C illustrate another texture pattern for use on the bottom surface 204 of a pawl shroud 200. As shown, the bottom surface 204 may include a predetermined texture pattern having a plurality of elevated ridges 208. As is shown, the elevated ridges 208 may cover a portion of the bottom surface 204, as is shown in Figure 11A, or substantially the entire bottom surface 204, as shown in Figure 11B. Figure 11C is a cross section view illustrating the elevated ridges 208 as applied to the bottom surface 204. As with the previously described recessed knurls 206, 206A, the elevated ridges 208 operate in conjunction with the toothed pawl 30 to provide increased resistance to slippage of the tie tail 26 during tensioning and to improve grip on the tie tail 26. Improved grip on the tie tail 26 reduces tie 20 breakage during installation and tensioning and further promotes longevity of the pawl 30. Moreover, the required hold force is reduced, thereby lessening wear on other cooperating components of the tool 10.

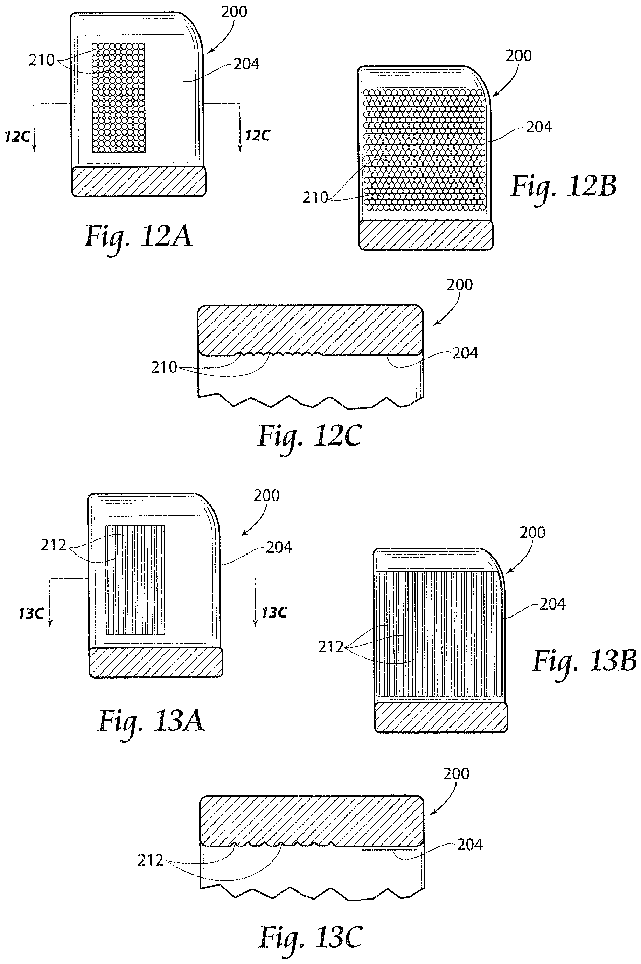

Figures 12A - 12C illustrate another texture pattern for use on the bottom surface 204 of a pawl shroud 200. In these views, the bottom surface 204 may include a predetermined texture pattern having a plurality of incised divots 210. As shown, and as in previous embodiments, the incised divots 210 may cover a portion of the bottom surface 204, as is shown in Figure 12A, or substantially the entire bottom surface 204, as shown in Figure 12B. Figure 12C is a cross section view illustrating the incised divots 210 as applied to the bottom surface 204. As with the previously described recessed knurls 206, 206A, and elevated ridges 208, the incised divots 210 operate in conjunction with the toothed pawl 30 to resist slippage of the tie tail 26 during tensioning and to improve grip of the tie tail 26. Improved grip on the tie tail 26 reduces tie 20 breakage during installation and tensioning, promotes longevity of the pawl 30, and lessens wear on other cooperating components of the tool 10.

Figures 13A - 13C illustrate another texture pattern for use on the bottom surface 204 of a pawl shroud 200. As shown, the bottom surface 204 may include a predetermined texture pattern having a plurality of incised grooves 212. As shown, and as in previous embodiments, the incised grooves 212 may cover a portion of the bottom surface 204, as is shown in Figure 13A, or substantially the entire bottom surface 204, as shown in Figure 13B. Figure 13C is a cross section view illustrating the incised grooves 212 as applied to the bottom surface 204. As with the previously described recessed knurls 206, 206A, elevated ridges 208, and incised divots 210, the incised grooves 212 operate in conjunction with the toothed pawl 30 to resist slippage of the tie tail 26 during tensioning and to improve grip on the tie tail 26. Improved grip on the tie tail 26 reduces tie 20 breakage during installation and tensioning, promotes longevity of the pawl 30, and lessens wear on other cooperating components of the tool 10.

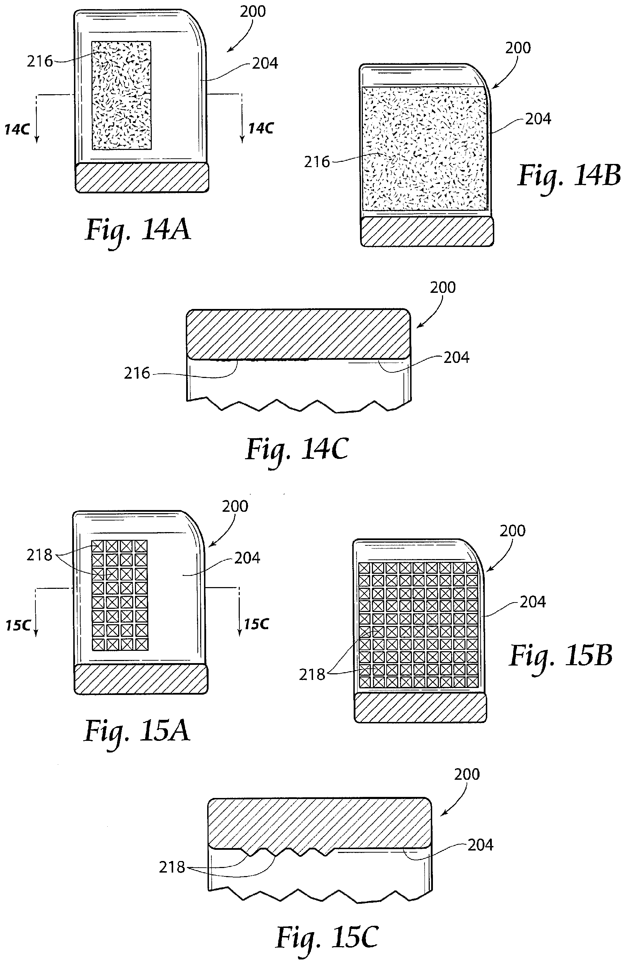

Figures 14A - 14C illustrate another texture pattern for use on the bottom surface 204 of a pawl shroud 200. As shown, the bottom surface 204 may include a predetermined textured pattern comprised of an aggregate 216. The aggregate 216 may be attached to the bottom surface 204 in any known manner, such as by adhesive (not shown) . As illustrated, and as in previous embodiments, the aggregate 216 may cover a portion of the bottom surface 204, as is shown in Figure 14A, or substantially the entire bottom surface 204, as shown in Figure 14B. Figure 14C is a cross section view illustrating the aggregate 216 as applied to the bottom surface 204. As with the previously described recessed knurls 206, 206A, elevated ridges 208, incised divots 210, and incised grooves 212, the aggregate 216 operates in conjunction with the toothed pawl 30 to resist slippage of the tie tail 26 during tensioning and to improve grip on the tie tail 26.

Figures 15A - 15C illustrate another texture pattern for use on the bottom surface 204 of a pawl shroud 200. As shown, the bottom surface 204 may include a predetermined textured pattern comprised of a plurality of raised knurls 218. As shown, the raised knurls 218 may cover a portion of the bottom surface 204, as is shown in Figure 15A, or substantially the entire bottom surface 204, as shown in Figure 15B. Figure 15C is a cross section view illustrating the raised knurls 218 as applied to the bottom surface 204. As with the previously described recessed knurls 206, 206A, elevated ridges 208, incised divots 210, and incised grooves 212, the raised knurls 218 operate in conjunction with the toothed pawl 30 to provide increased resistance to slippage of the tie tail 26 during tensioning and to improve grip on the tie tail 26.

It is to be understood that while various texture patterns having a high coefficient of friction illustrated are disclosed herein, the present invention is not limited, and may include other knurling patterns, laser etching, abrasion, cutting, stippling or other patterns able to impart a higher coefficient of friction to the pawl shroud, without limitation.

The foregoing is considered as illustrative only of the principles of the invention. Furthermore, since numerous modifications and changes will readily occur to those skilled in the art, it is not desired to limit the invention to the exact construction and operation shown and described. While the preferred embodiment has been described, the details may be changed without departing from the invention which is defined by the claims.

## Claims

1. A cable tie tensioning and cut-off tool (10) including:
a housing (12) having a grip portion (14), a barrel portion (16), and a trigger (18) located forwardly of the grip portion and under the barrel portion; and
a reciprocating tension mechanism (28A, 28B) located in the barrel portion, the tension mechanism including a gripping mechanism having a pawl (30),
**characterized in that** the gripping mechanism further comprises a pawl shroud (200), the pawl cooperating with the pawl shroud and the pawl shroud including at least one surface (204) having a texture pattern (206, 206A, 208, 210, 212, 218), the texture pattern having a high coefficient of friction.

2. The cable tie tensioning and cut-off tool of claim 1, wherein the texture pattern includes a plurality of recessed knurls (206, 206A).

3. The cable tie tensioning and cut-off tool of claim 2, wherein the plurality of recessed knurls (206, 206A) covers a portion of the at least one surface (204).

4. The cable tie tensioning and cut-off tool of claim 3, wherein the plurality of recessed knurls (206, 206A) covers a majority of the at least one surface (204).

5. The cable tie tensioning and cut-off tool of claim 1, wherein the texture pattern includes a plurality of elevated ridges (208).

6. The cable tie tensioning and cut-off tool of claim 5, wherein the plurality of elevated ridges (208) covers a portion of the at least one surface (204).

7. The cable tie tensioning and cut-off tool of claim 5, wherein the plurality of elevated ridges (208) covers a majority of the at least one surface (204).

8. The cable tie tensioning and cut-off tool of claim 1, wherein the texture pattern includes a plurality of incised divots (210).

9. The cable tie tensioning and cut-off tool of claim 8, wherein the plurality of incised divots (210) covers a portion of the at least one surface (204).

10. The cable tie tensioning and cut-off tool of claim 1, wherein the texture pattern is selected from the group consisting of recessed knurls (206, 206A), elevated ridges (208), incised divots (210), incised grooves (212), an aggregate (216), and raised knurls (218).

11. The cable tie tensioning and cut-off tool of claim 1, wherein the texture pattern includes a plurality of incised grooves (212).

12. The cable tie tensioning and cut-off tool of claim 11, wherein the plurality of incised grooves (212) covers a portion of the at least one surface (204).

13. The cable tie tensioning and cut-off tool of claim 1, wherein the texture pattern includes a plurality of raised knurls (218).

14. The cable tie tensioning and cut-off tool of claim 13, wherein the plurality of raised knurls (218) covers at least a portion of the at least one surface (204).

15. The cable tie tensioning and cut-off tool of claim 1, wherein the texture pattern includes an aggregate (216).

## Patentansprüche

1. Kabelbinderspann- und -schneidwerkzeug (10), das Folgendes umfasst:
ein Gehäuse (12) mit einem Griffabschnitt (14), einem Trommelabschnitt (16) und einem Auslöser (18), der vor dem Griffabschnitt und unter dem Trommelabschnitt angeordnet ist; und
einen hin- und hergehenden Spannungsmechanismus (28A, 28B), der in dem Trommelabschnitt angeordnet ist, wobei der Spannmechanismus einen Greifmechanismus mit einer Sperrklinke (30) aufweist,
**dadurch gekennzeichnet, dass** der Greifmechanismus ferner Folgendes umfasst: eine Sperrklinkenabdeckung (200), wobei die Sperrklinke mit der Sperrklinkenabdeckung zusammenwirkt, und die Sperrklinkenabdeckung mindestens eine Oberfläche (204) mit einem Texturmuster (206, 206A, 208, 210, 212, 218) aufweist, wobei das Texturmuster einen hohen Reibungskoeffizienten aufweist.

2. Kabelbinderspann- und -schneidwerkzeug nach Anspruch 1, wobei das Texturmuster eine Vielzahl von vertieften Rändelungen (206, 206A) aufweist.

3. Kabelbinderspann- und -schneidwerkzeug nach Anspruch 2, wobei die Vielzahl von vertieften Rändelungen (206, 206A) einen Teil der mindestens einen Oberfläche (204) abdeckt.

4. Kabelbinderspann- und -schneidwerkzeug nach Anspruch 3, wobei die Vielzahl von vertieften Rändelungen (206, 206A) einen Großteil der mindestens einen Oberfläche (204) abdeckt.

5. Kabelbinderspann- und -schneidwerkzeug nach Anspruch 1, wobei das Texturmuster eine Vielzahl von erhöhten Rippen (208) aufweist.

6. Kabelbinderspann- und - schneidwerkzeug nach Anspruch 5, wobei die Vielzahl von erhöhten Rippen (208) einen Teil der mindestens einen Oberfläche (204) abdeckt.

7. Kabelbinderspann- und - schneidwerkzeug nach Anspruch 5, wobei die Vielzahl von erhöhten Rippen (208) einen Großteil der mindestens einen Oberfläche (204) abdeckt.

8. Kabelbinderspann- und -schneidwerkzeug nach Anspruch 1, wobei das Texturmuster eine Vielzahl von eingeschnittenen Hohlräumen (210) umfasst.

9. Kabelbinderspann- und -schneidwerkzeug nach Anspruch 8, wobei die Vielzahl von eingeschnittenen Vertiefungen (210) einen Teil der mindestens einen Oberfläche (204) abdeckt.

10. Kabelbinderspann- und - schneidwerkzeug nach Anspruch 1, wobei das Texturmuster aus der Gruppe bestehend aus vertieften Rändelungen (206, 206A), erhöhten Rippen (208), eingeschnittenen Hohlräumen (210), eingeschnittenen Nuten (212), einem Gemisch (216) und erhöhten Rändelungen (218) ausgewählt ist.

11. Kabelbinderspann- und -schneidwerkzeug nach Anspruch 1, wobei das Texturmuster eine Vielzahl von eingeschnittenen Nuten (212) umfasst.

12. Kabelbinderspann- und -schneidwerkzeug nach Anspruch 11, wobei die Vielzahl von eingeschnittenen Nuten (212) einen Teil der mindestens einen Oberfläche (204) abdeckt.

13. Kabelbinderspann- und -schneidwerkzeug nach Anspruch 1, wobei das Texturmuster eine Vielzahl von erhöhten Rändelungen (218) umfasst.

14. Kabelbinderspann- und -schneidwerkzeug nach Anspruch 13, wobei die Vielzahl von erhöhten Rändelungen (218) mindestens einen Teil der mindestens einen Oberfläche (204) abdecken.

15. Kabelbinderspann- und -schneidwerkzeug nach Anspruch 1, wobei das Texturmuster ein Gemisch (216) umfasst.

## Revendications

1. Outil de tension et de coupe d'attache de câble (10) comprenant :
un boîtier (12) comportant une partie de préhension (14), une partie de cylindre (16) et un déclencheur (18) situé vers l'avant de la partie de préhension et en dessous de la partie de cylindre ; et
un mécanisme (28A, 28B) de tension alternative situé dans la partie de cylindre, le mécanisme de tension comprenant un mécanisme de préhension doté d'un cliquet (30),
**caractérisé en ce que** le mécanisme de préhension comprend en outre une enveloppe (200) à cliquet, le cliquet coopérant avec l'enveloppe à cliquet et l'enveloppe à cliquet comprenant au moins une surface (204) comportant un motif de texture (206, 206A, 208, 210, 212, 218), le motif de texture présentant un coefficient élevé de frottement.

2. Outil de tension et de coupe d'attache de câble selon la revendication 1, le motif de texture comprenant une pluralité de molettes évidées (206, 206A).

3. Outil de tension et de coupe d'attache de câble selon la revendication 2, la pluralité de molettes évidées (206, 206A) couvrant une partie de l'au moins une surface (204).

4. Outil de tension et de coupe d'attache de câble selon la revendication 3, la pluralité de molettes évidées (206, 206A) couvrant une grande partie de l'au moins une surface (204).

5. Outil de tension et de coupe d'attache de câble selon la revendication 1, le motif de texture comprenant une pluralité de crêtes élevées (208).

6. Outil de tension et de coupe d'attache de câble selon la revendication 5, la pluralité de crêtes élevées (208) couvrant une partie de l'au moins une surface (204).

7. Outil de tension et de coupe d'attache de câble selon la revendication 5, la pluralité de crêtes élevées (208) couvrant une grande partie de l'au moins une surface (204).

8. Outil de tension et de coupe d'attache de câble selon la revendication 1, le motif de texture comprenant une pluralité de mottes incisées (210).

9. Outil de tension et de coupe d'attache de câble selon la revendication 8, la pluralité de mottes incisées (210) couvrant une partie de l'au moins une surface (204).

10. Outil de tension et de coupe d'attache de câble selon la revendication 1, le motif de texture étant choisi dans le groupe constitué de molettes évidées (206, 206A), de crêtes élevées (208), de mottes incisées (210), de rainures incisées (212), d'un agrégat (216) et de molettes surélevées (218).

11. Outil de tension et de coupe d'attache de câble selon la revendication 1, le motif de texture comprenant une pluralité de rainures incisées (212).

12. Outil de tension et de coupe d'attache de câble selon la revendication 11, la pluralité de rainures incisées (212) couvrant une partie de l'au moins une surface (204).

13. Outil de tension et de coupe d'attache de câble selon la revendication 1, le motif de texture comprenant une pluralité de molettes surélevées (218).

14. Outil de tension et de coupe d'attache de câble selon la revendication 13, la pluralité de molettes surélevées (218) couvrant au moins une partie de l'au moins une surface (204).

15. Outil de tension et de coupe d'attache de câble selon la revendication 1, le motif de texture comprenant un agrégat (216).
